# EUROPEAN PATENT SPECIFICATION

(11) **EP 3 129 112 B1**
(45) Date of publication and mention of the grant of the patent: **07.06.2023**
(21) Application number: 15719158.6
(22) Date of filing: 14.04.2015
(51) Int. Cl.: A63F 13/65, A63F 13/216, A63F 13/35, A63F 13/45, A63F 13/56, A63F 13/822

(54) **DEVICE, GAME AND METHODS THEREFORE**
VORRICHTUNG, SPIEL UND VERFAHREN DAFÜR
DISPOSITIF, JEU ET PROCÉDÉS ASSOCIÉS

(30) Priority: 15.04.2014 US 201414253222; 03.12.2014 US 201414558925; 03.12.2014 US 201414558831
(43) Date of publication of application: 15.02.2017
(73) Proprietor: King.com Limited, St. Julians STJ 3140 (MT)
(72) Inventor: WROBLEWSKI, Daniel, 111 34 Stockholm (SE); MALMER, Fredrik, 111 34 Stockholm (SE); JOHANSSON, Pia Kristina, 111 34 Stockholm (SE)
(74) Representative: Style, Kelda Camilla Karen
(86) International application number: PCT/EP2015/058038
(87) International publication number: WO 2015/158697

(56) References cited:
- WO-A2-98/38561
- US-A1- 2003 058 238
- US-A1- 2004 150 675
- US-A1- 2005 203 922
- US-A1- 2013 321 400
- US-A1- 2013 328 879
- HALL J: "Mogi: Second Generation Location-Based Gaming", INTERNET CITATION, April 2004 (2004-04), XP002352048, Retrieved from the Internet: URL:http://www.thefeaturearchives.com/topi c/Gaming/Mogi_Second_Generation_Location-B ased_Gaming.html [retrieved on 2005-10-31]

## Description

### FIELD OF EMBODIMENTS

The invention relates to the processing of map data or the use of map data. This is in the context of a computer implemented game.

Some embodiments may relate to controlling a user interface responsive to user engagement with displayed game objects on the interface of a computer device.

Some embodiments may relate to computer devices having a user interface for engaging users or players in a computer game executable in an online environment.

### BACKGROUND

There are many technical challenges and technical considerations facing the designer of computer games executed on user or computer devices having a user interface, such as designing a controllable user interface in the context of available computer devices and resources, which may be limited.

There are technical challenges when providing a location based game on a mobile device which does not overly consume battery power.

US 2013/321400 A1 discloses a non-transitory machine-readable medium that stores a program which when executed on a device by at least one processing unit provides different viewing modes for viewing a three-dimensional (3D) map. The program renders a first view of the 3D map for display in a first viewing mode based on a first set of map data. The program receives input to adjust the view of the 3D map. In response to the input, the program renders a second view of the 3D map for display in a second viewing mode based on a second set of map data different from the first set of map data.

HALL J "Mogi: Second Generation Location-Based Gaming" describes a game run on a mobile device which shows a user's location on a map. The map displays a data-layer over the city of Tokyo. This shows, for example, items that the player can pick up and other players nearby that the player may interact with.

WO 98/38561 discloses a method and system for storing and retrieving spatial data objects from a spatial database. The system stores multi-dimensional objects within the database by determining their position in a multi-tiered coordinate system. Once each object has been assigned to a particular coordinate, the object is further assigned to one of many overlapping sections within the coordinate system. Each object is assigned to a particular section of the coordinate system depending on its overall size and position.

US2013/328879A1 discloses a process is provided that reduces the amount of data for a map tile that could not be displayed separately on the scale of that tile. The process generates an equivalent of the road data by rasterizing the vectors representing road segments lying within a tile and generating a connectivity mask that keeps track of which pixels are connected to which other pixels along the vectors.

US2003/058238A1 discloses software for designing and building virtual environments for playing computer games. A map builder is used to construct one or more two-dimensional maps comprised of tiles selected from a set of tiles, the map or maps representing the virtual environment for the computer game.

US2005/203922A1 discloses a system and method for facilitating development of computer games that depict or represent actual, real world geographic areas as part of the play scenarios of the games. A source database contains data that represent geographic features in a region including roads in the region. The data in the source database includes attributes suitable for use for providing navigation-related functions.

### SUMMARY

The present invention is defined by the appended independent claims. Particular embodiments are set out in the dependent claims.

According to an aspect, there is provided a method comprising: processing map data to provide a simplified tile of map data, said processing causing removal of at least one map feature from said map data to provide a simplified tile of map data; defining for said tile of map data at least one edge node, said edge node being provided for a or each map feature crossing a boundary of said tile; and providing said tile of map data to a user device.

The method is performed in an apparatus. The apparatus is a server. The processing is performed by at least one processor. The tile map data is transmitted to the user device.

The tile map data is for use in in playing a game.

The method may comprise storing said map data in a database.

The processing may comprises querying a database storing said map data.

The processing may comprise making one or more SQL queries against the database.

The processing may comprise filtering said map data.

The processing may further comprise for at least one geographic feature defined by a plurality of polygons, combining said plurality of polygons to provide one polygon.

The processing may further comprise generating a plurality of markers, each marker defining a position where the game is able to place one or more game objects.

Each marker may have a unique identifier.

According to another aspect, there is provided a method comprising: obtaining at least two tiles of map data, said tiles being adjacent to one another, each of said tiles of map data comprising at least one edge node provided for a or each map feature crossing a boundary between two of said tiles; rendering at least part of said tiles of map data; and matching the edge nodes of said adjacent tiles to allow the map feature crossing the boundary to be joined.

The joining may be a logical joining.

This allows a game element in a computer implemented game to move along a map feature from one tile to the adjacent tile.

The matching may be part of the rendering.

The method is performed in a user device.

The rendering may comprise providing rendered map data and the method may comprise providing the rendered map data to a display.

The obtaining may comprises at least one of: obtaining at least one tile of map data from a memory of a user device; and receiving at least one tile of map data from a server.

The method may comprise determining a location of the user device and displaying a map, wherein the map which is displayed is dependent on a location of the user device.

The map data may comprise a plurality of markers, each marker defining a position where the game is able to place one or more game objects, said method may comprise using at least one marker to control the position of at least one game object.

According to an aspect, there is provided a method comprising processing map data to provide a simplified tile of map data, said processing causing removal of at least one map feature from said map data to provide a simplified tile of map data.

According to an aspect, there is provided a method comprising defining for a tile of map data at least one edge node, said edge node being provided for a or each map feature crossing a boundary of said tile.

According to an aspect, there is provided an apparatus comprising: a database configured to store map data; at least one processor configured to process the map data to provide a simplified tile of map data, said processor configured to cause removal of at least one map feature from said map data to provide a simplified tile of map data and to define for said tile of map data at least one edge node, the or each edge node being provided for a map feature crossing a boundary of said tile; and an output configured to provide said tile of map data to a user device.

The apparatus is provided by at least one server.

The tile map data is for use in playing a computer implemented game.

The at least one processor may be configured to query said database.

The at least one processor may be configured to make one or more SQL queries against the database.

The at least one processor may be configured to filter said map data.

The at least one processor may be configured to for at least one geographic feature defined by a plurality of polygons, combine said plurality of polygons to one polygon.

The at least one processor may be configured to generate a plurality of markers, each marker defining a position where the game is able to place one or more game objects.

Each marker may have a unique identifier.

According to an aspect, there is provided an apparatus of a user device comprising: a memory configured to store tile data; at least one processor configured to obtain at least two tiles of map data from said memory, said tiles being adjacent to one another, each of said tiles of map data comprising at least one edge node provided for a or each map feature crossing a boundary between two of said tiles, render at least part of said tiles of map data to provided rendered map data, output said rendered map data to a display of the user device, wherein said at least one processor is configured to matching the edge nodes of said adjacent tiles to allow the map feature crossing the boundary to be joined.

This allows a game element of a computer implemented game to move along a map feature from one tile to the adjacent tile.

The memory may be configured to be a cache memory. Alternatively or additionally said memory may be configured to store said at least two tiles of map data in response to a request being sent to a server.

The apparatus may comprise an input configured to receive at least one tile of map data from a server, said received at least one tile of map data being stored in said memory.

The matching comprises storing in memory a logical connection between respective edge nodes on adjacent tiles.

The apparatus may comprise a location determiner configured to determine a location of the apparatus and said processor is configured to control the display such that the map displayed is dependent on said location.

The map data may comprise a plurality of markers, each marker defining a position where the game is able to place one or more game objects, said at least one processor being configure to use at least one marker to control the position of at least one game object.

According to an aspect, there is provided an apparatus comprising: at least one processor configured to process map data to provide a simplified tile of map data, said processor configured to cause removal of at least one map feature from said map data to provide a simplified tile of map data.

According to an aspect, there is provided an apparatus comprising: at least one processor configured to define for a tile of map data at least one edge node, said edge node being provided for a or each map feature crossing a boundary of said tile.

According to an aspect, there is provided a program comprising program code instructions that, when executed by a processor, causes said processor to perform the following steps: process map data to provide a simplified tile of map data, said processing causing removal of at least one map feature from said map data to provide a simplified tile of map data; define for said tile of map data at least one edge node, the or each edge node being provided for a map feature crossing a boundary of said tile; and provide said tile of map data to a user device for use in a playing a game.

According to an aspect, there may be provided a computer readable storage device storing instructions that, when executed by a processor, causes said processor to perform the following steps: process map data to provide a simplified tile of map data, said processing causing removal of at least one map feature from said map data to provide a simplified tile of map data; define for said tile of map data at least one edge node, the or each edge node being provided for a map feature crossing a boundary of said tile; and provide said tile of map data to a user device for use in a playing a game.

According to an aspect, there is provided a program comprising program code instructions that, when executed by a processor, causes said processor to perform the following steps: obtain at least two tiles of map data, said tiles being adjacent to one another, each of said tiles of map data comprising at least one edge node provided for a map feature crossing a boundary between two of said tiles; render at least part of said tiles of map data to provided rendered map data; output said rendered map data to a display of a user device; and match the edge nodes of said adjacent tiles to allow a game element to move along a map feature from one tile to the adjacent tile.

According to an aspect, there may be provided a computer readable storage device storing instructions that, when executed by a processor, causes said processor to perform the following steps: obtain at least two tiles of map data, said tiles being adjacent to one another, each of said tiles of map data comprising at least one edge node provided for a or each map feature crossing a boundary between two of said tiles; render at least part of said tiles of map data to provided rendered map data; output said rendered map data to a display of a user device; match the edge nodes of said adjacent tiles to allow a game element to move along a map feature from one tile to the adjacent tile.

According to an aspect, there is provided a method comprising: displaying a map on a display of a user device, the map comprising a destination; generating one or more entities to be displayed on the map; and selecting one of the entities and guiding the selected entity along a route of the map to the destination.

The method may comprise determining a location of the user device and wherein the map displayed is dependent on a location of the user device.

The method may comprise displaying said map with the location of the user device.

The map displayed may be at least partially a real world map.

The map may have one or more other destinations associated with other users.

The route may comprise one or more roads or paths of the map.

The destination may be associated with a user of the user device.

The method may comprise providing a reward when the entity is guided to the destination.

The one or more entities may be generated by the user device.

The display may be a touch screen and the selecting may comprise touching the touch screen on the entity to be selected.

The guiding of the selected entity may comprise causing the selected entity to follow a route defined by interaction with said user device.

The guiding may comprise guiding by a controller of said user device of the selected entity to said destination.

According to an aspect, there is provided an apparatus comprising: a display configured to display a map, the map comprising a destination; a controller configured to generate one or more entities to be displayed on the map on the display; and an input configured such that one or more of said entities is selected and the selected one or more entities is guided along a route of the map to the destination.

The controller may comprise at least one processor and at least one memory including computer code for one or more programs, the at least one memory and the computer code configured, with the at least one processor, to provide one or more functions of the controller.

The apparatus may comprise a location determiner configured to determine a location of the user device and wherein the map displayed is dependent on a location of the user device.

The display may be configured to display said map with the location of the user device.

The display may be configured to display at least partially a real world map.

The route may comprise one or more roads or paths of the map.

The destination may be associated with a user of the user device.

The controller may be configured to provide a reward when the entity is guided to the destination.

The display may be a touch screen and the input may be provided by the touch screen such that when the entity is to be selected, said displayed entity is selected by a touch of said display at a location at which said entity is displayed.

The guiding of the selected entity may comprise causing the selected entity to follow a route defined by interaction with said user device.

The controller may be configured to guide the selected entity to said destination.

According to another aspect, there is provided a program comprising program code instructions that, when executed by a processor, causes said processor to perform the following: display a map on a display of a user device, the map comprising a destination; generating one or more entities to be displayed on the map; and guide the selected entity along a route of the displayed map to the destination.

According to another aspect, there is provided a computer readable storage device storing instructions that, when executed by a processor, causes said processor to perform the following: display a map on a display of a user device, the map comprising a destination; generate one or more entities to be displayed on the map; and guide the selected entity along a route of the displayed map to the destination.

According to an aspect, there is provided a method comprising: receiving in an apparatus information indicating an item associated with an identity of a first user which has been selected by a second user in a computer implemented game, said information being received in said apparatus from a user device running said computer implemented game and being used by said second user; processing said information to determine said identity of said first user; and transmitting a message to a user device associated with said first user indicating selection of said item.

The item may be associated with a destination on a map.

The information may comprise at least one of: information indicating a location on a map associated with said destination; information identifying said item; and information indicating said destination.

The processing of said information to determine said first user may comprise using said information to look up said first user in a database of said apparatus.

The method may comprise associating said item with an identity of said second user.

The method may comprise associating said item with one or more destinations associated with an identity of said second user.

The method may comprise transmitting identity information associated with said second user in said message sent to said user device associated with said first user.

According to an aspect, there may be provided a method comprising: determining in a user device a selection of an item by a second user in response to an input received from a user input of the user device, said item being associated with a first user and a first destination of a map in a computer implemented game run by said user device; and transmitting by said user device information identifying said item to a game server, said item being associated with one or more second destinations associated with said second user in response to said selection.

The information may comprises at least one of: information indicating a location on a map associated with said destination; information about said item; and information indicating said destination.

The method may comprise transmitting identity information associated with said second user to said game server.

According to an aspect, there may be provided an apparatus comprising: an input configured to receive information indicating an item associated with an identity of a first user which has been selected by a second user in a computer implemented game, said information being received in said apparatus from a user device running said computer implemented game and being used by said second user; at least one processor configured to use said information to determine said identity of said first user; and an output configured to transmit a message to a user device associated with said first user indicating selection of said item.

The item may be associated with a destination on a map.

The information may comprise at least one of: information indicating a location on a map associated with said destination; information identifying said item; and information indicating said destination.

The apparatus may comprise a database storing an association between said information and said first user, and said at least one processor is configured to use said information to look up said first user in the database.

The processor may be configured to associate said item with an identity of said second user in said database.

The processor may be configured to associate said item with one or more destinations associated with an identity of said second user.

The processor may be configured to cause identity information associated with said second user to be provided in said message.

According to an aspect, there is provided an apparatus in a user device comprising: an input configured to receive an input from a user of said device, said user being a second user; at least one processor configured to determine a selection of an item by a second user in response to an input received by said input, said item being associated with a first user and a first destination of a map in a computer implemented game; and an output configured to transmit information identifying said item to a game server, said item being associated with one or more second destinations of said second user.

The information comprises at least one of: information indicating a location on a map associated with said destination; information about said item; and information indicating said destination.

The at least one processor may be configured to cause identity information associated with said second user to be transmitted by said output to said game server.

According to an aspect, there is provided a method comprising: selecting, in response to an input from a user interface, a scouting algorithm in a computer implemented game; running said scouting algorithm, said scouting algorithm configured to provide a game element at a location on a displayed map of said computer implemented game; and determining if one or more sub-items of an item are present at said location; wherein said selecting, running and determining steps are repeated until all of said sub-items of said item have been found.

When all of said sub-items have been found, the method may comprise causing said item to be available for selection by a different user.

When all of said sub-items have been found, the method may comprise causing information to be sent to a server which causes said item to be available for selection by a different user.

According to an aspect, there is provided an apparatus in a user device comprising: an input configured to receive an input from a user of said device; a display; a processor configured to select, in response to an input from said input, a scouting algorithm in a computer implemented game, to run said scouting algorithm, said scouting algorithm configured to control the display such that a game element is provided at a location on a displayed map of said computer implemented game, and to determine if one or more sub-items of an item are present at said location; wherein said selecting, running and determining are repeated by said processor until all of said sub-items of said item have been found.

When all of said sub-items have been found, the processor may be configured to cause said item to be available for selection by a different user.

The apparatus may comprise a transmitter and when all of said sub-items have been found, the transmitter may be configured to transmit information to a server which causes said item to be available for selection by a different user.

A computer program product comprising program code means which when loaded into a processor controls the processor to perform the method may also be provided. Various other aspects and further embodiments are also described in the following detailed description and in the attached claims.

### BRIEF DESCRIPTION OF THE DRAWINGS

Some embodiments will now be described by way of example only, with reference to the accompanying drawings in which:
Figure 1 shows a flow diagram of a method for determining if a cached map tile is available for a position of the user device;
Figure 2 shows one branch of the flow diagram of Figure 1 in more detail-
Figure 3 shows another branch of the flow diagram of Figure 1 in more detail;
Figure 4 shows a method for displaying a position of the user device on a map;
Figure 5 shows a method for displaying and controlling a game element; and
Figure 6 shows an image displayed for the method of Figure 5;
Figure 7 shows a method with proximity and non proximity modes;
Figure 8 shows a method for building in a game;
Figure 9 schematically shows a user device;

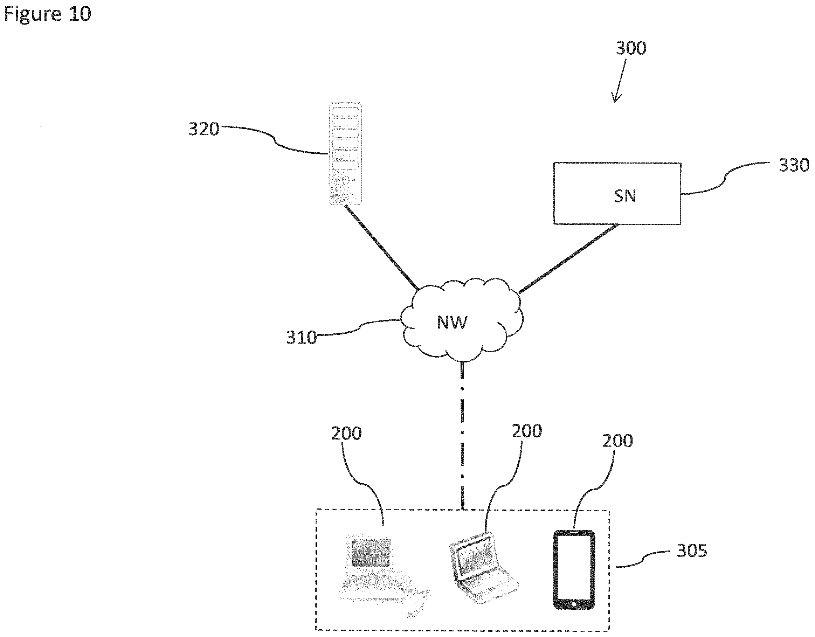

Figure 10 schematically shows a system in which embodiments may be provided;
Figure 11 shows a method for processing map data;
Figure 12 shows a method for using the processed map data at a user device; and
Figure 13 schematically shows an apparatus for supporting the processing of the map data;
Figure 14 schematically shows two adjacent tiles; and
Figures 15a and 15b illustrated one example of polygon reduction for map simplification;
Figure 16 schematically shows a data structure used in some embodiments;
Figure 17 shows a method where an item associated with one user is selected by another user; and
Figure 18 shows a method where a plurality of sub-items of an item are collected.

### DETAILED DESCRIPTION OF SOME EMBODIMENTS

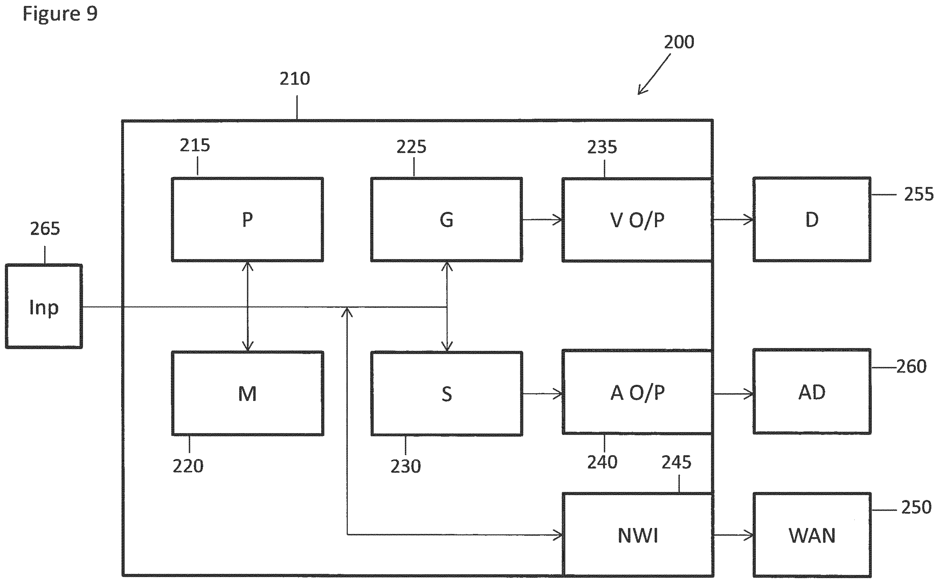

A schematic view of a user or computing device 200 according to an embodiment is shown in Figure 9. All of the blocks shown are implemented by suitable circuitry. The blocks may be implemented in hardware and/or software. The user device may have a controller 210. The controller 210 has one or more processors 215 and one or more memories 220. The controller 210 is also shown as having a graphics controller 225 and a sound controller 230. It should be appreciated that one or other or both of the graphics controller 225 and sound controller 230 may be provided by the one or more processors 215.

The graphics controller 225 is configured to provide a video output 235. The sound controller 230 is configured to provide an audio output 240. The controller 210 has an interface 245 allowing the device to be able to communicate with a network 250 such as the Internet or other communication infrastructure.

The video output 235 is provided to a display 255. The audio output 240 is provided to an audio device 260 such as a speaker and/or earphone(s).

The device 200 has an input device 265. The input device 265 can take any suitable format and can be one or more of a keyboard, mouse, touch screen, joystick or game controller. It should be appreciated that the display 255 may in some embodiments also provide the input device 265 by way of an integrated touch screen for example.

The blocks of the controller 210 are configured to communicate with each other by an interconnect such as a bus or any other suitable interconnect and/or by point to point communication.

It should be appreciated that in some embodiments, the controller 210 may be implemented by one or more integrated circuits, at least in part.

The user device 200 is shown by way of example only. In alternative embodiments, one or more of the parts may be omitted. Alternatively or additionally, some embodiments may comprise one or more other parts. Alternatively or additionally, one or more parts may be combined.

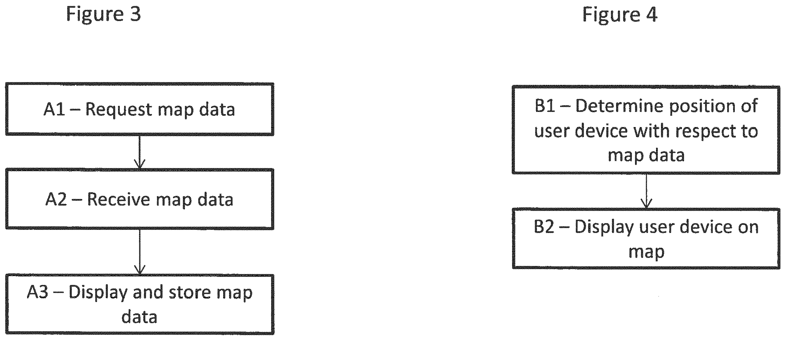

Figure 3 schematically shows a system 300 in some embodiments. The system 300 comprises a server 320 which may store databases of game players' details, profiles and game data. In practice, one or more databases may be provided. Where more than one server is provided, the database(s) may be provided in one database or across two or more servers 320. The server 320 may also have a games data function. This may comprise a memory to store the computer game program and a processor to run the games program.

The server may communicate via for instance the internet 310 to one or more user devices 305. It should be appreciated that embodiments may be deployed in different system architectures. For example, the computer game may be implemented as a computer game that is stored in the memory 220 of the user device 200 and is run on the processor 215 of the user device 200. However, the server 320 may handle some elements of the game in some embodiments. By way of example only, a Java game applet may be provided to the user device 200 and the locally running Java applet will generate, for example, the graphics, sounds, and user interaction for the game play on the user device 200. Some data may be fed back to the server 320 to allow interaction with other players 305..

In some embodiments, the game may be implemented as a computer program that is stored in a memory of the system, for example the server 320, and which runs on a processor of the game server. Data streams or updates are supplied to the user device 200 to allow the user device 200 to render and display graphics and sounds in a browser of the user device 200. Alternatively or additionally one or more aspects of the game may be controlled by the controller in the user device.

In preferred embodiments, the user device may be a mobile device as some aspects of the game may relate to the location of the user device. However, it should be appreciated that non mobile devices may be used in some embodiments.

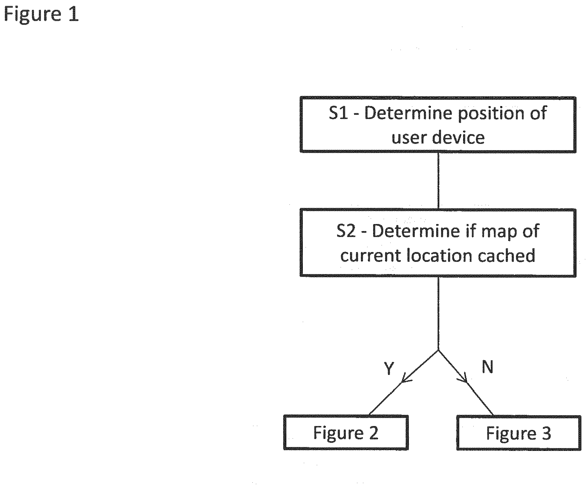

Reference is made to Figure 1. In step S1, the position of the user device is determined. In some embodiments, coordinate information for the user device may be determined. This step may use any suitable location determining technique. Some embodiments may uses a satellite based position determining technique such as GPS. GLONASS or Galileo. Other location based techniques may alternatively or additionally used. For example, position information from a mobile telecommunication network may be used.

In step S2, a determination is made to determine if a map is available which includes the current location of the user device. In particular, a determination is made to see whether or not a map tile including the current location is stored.

In some embodiments, the map information may be provided by map tiles. Each map tile will cover a geographic area. In some embodiments, adjacent map tiles may each include part of the same information to provide an overlap between the borders of the two adjacent tiles. In other embodiments, there may be no region of overlap between adjacent tiles.

Each tile may be defined by range information which will define a range of coordinates included in that tile. The determination may comprise determining if the coordinates of the user device fall in the range of any of the tiles. If the coordinates of the user device fall within the range of more than one tile, the tile which has the coordinates of the user device further from a tile edge may be selected.

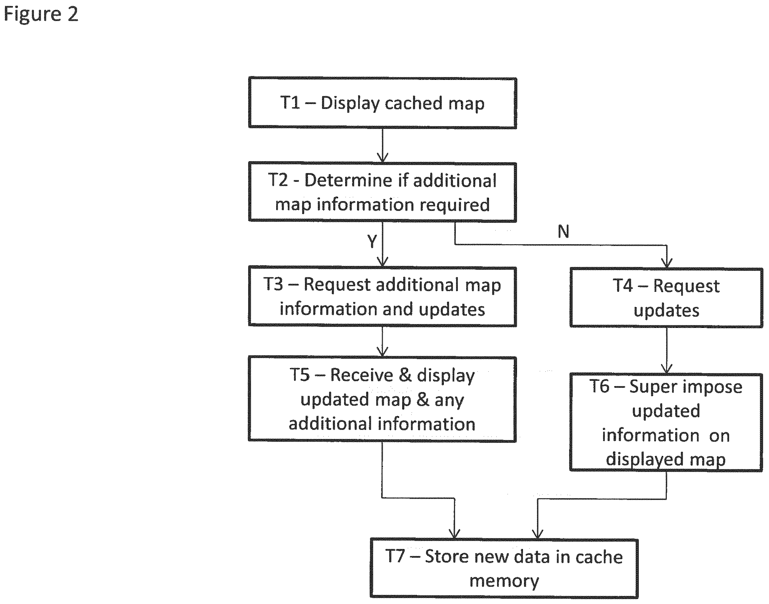

If it is determined that a map tile including the current location has been stored already, the method shown in Figure 2 is performed. If on the other hand, it is determined that there is no map including the current location stored in memory, then the method of Figure 3 is carried out.

The map information or tiles may be stored in cache memory or in any other suitable memory.

Reference is made to Figure 2. In step T1 the cached map tile is at least partially displayed.

In step T2, a determination is made to see if additional map information is required. This may for example be carried out in dependence on the position of the user device with respect to the map tile. For example, if the user device is located in an edge region of the cached map tile, it may be determined that additional map information is required and that additional map information is not in a map tile which has been already stored.

In some embodiments, a determination may be made as to a direction in which the user device is moving and this may cause a determination to be made that additional map information will be required.

If it is determined that additional information map information is required, in step T3 the additional map information is requested. In some embodiments, the request may also include a request for game information.

In step T5, the updated map information is received and optionally may be displayed.

In those embodiments where additional information has been requested and received, at least some additional information may also be displayed.

If, on the other hand, it is determined that no additional map information is required, the user device may request from the game server game update updates, in step T4.

In step T6, at least some of the received game information may be displayed.

In step T7, the new map data and any additional information may be stored in memory.

It should be appreciated that in some embodiments, the steps shown in Figure 2 may be carried out in any suitable order. For example, the storing of the new data may take place as soon as that data is received. In some embodiments, the displaying of a cached map may only take place after a determination has been made as to whether any additional map information is required.

In some embodiments, the user device does not specifically request updated game information. Rather, the server will push updated game information to the user device,

Reference is made to Figure 3 which shows the steps which are carried out when it is determined that there is no map including the current location. In step A1, the user device will cause a request for map data to be sent to the server.

In step A2, the user device will receive from the server the requested map data. In step A3, the received map data is displayed and stored.

It should be appreciated that in those embodiments where additional map data is required, the information which is sent by the user equipment may include the determined location of the user device.

Reference is made to Figure 4. In step B1, a determination is made as to the position of the user device with respect to the map data. This may be done by using the user device coordinates and comparing the user device coordinates with the map tile coordinates.

The user device is displayed in step B2 super imposed on the map data displayed. In some embodiments, the user device position is not displayed.

In some embodiments, the map is displayed initially on the display with the user device centred on the displayed map. This may be case where the user device position is displayed and/or where the user device is not displayed.

It should be appreciated that the steps of Figure 4 may be carried out in conjunction for example with any of the steps prior to the display of a map.

Thus, the map data is stored in memory in the form of tiles. In some embodiments, the game data will use the map data which is stored locally to render the map image. The map data is static data and is provided in one layer.

In some embodiments, the static map data may comprise data such as roads, parks, water, farmland and/or the like. In some embodiments, the map data may include no building data. In other embodiments, the map data can include some building data, such as key landmarks.

The game data is dynamic data which is stored separately and is provided in a different layer overlying the map data. The game data and the map data are stored separately. The game data maybe in the form of coordinates which are defined with respect to the map data. The coordinates of the game elements are used to display the game elements on the map. The game elements may be buildings, entities or the like. The user device coordinates with respect to the map data are determined and stored in some embodiments.

It should be appreciated that in some embodiments, a mechanism may be provided so that the server only provides updates to the dynamic game data. This may be achieved by for example the user device providing the game server with information indicating the time at which the dynamic game data was last updated. This may for example be done when the player signed into a game or on a periodic basis. Alternatively or additionally, the server may push game data to the user device at periodic intervals. The pushing of data to the user device may only be carried out after a hand shake procedure so that the server does not attempt to push data to a user device which is not currently engaged in a game.

In some embodiments a memory may be provided to store up to a given number of map tiles. The tiles may be stored in dependence on most recent usage. For example the n most recently used tiles may be stored with the oldest map tile being over written if there is a more recent map tile to be stored. In some embodiments, alternatively or additionally a map tile may be given a weight depending on its frequency of use.

In some embodiments, there may be three levels of tile cache:
Level 1 - The tile exists inside the game scene as a game object, although hidden. Here the tile contains all generated geometry and gameplay elements added upon load. In some embodiments, the visible tiles plus a radius of two tiles in all directions (for example 5x5 tiles) are kept. No prioritization other than visibility is done here in some embodiments.
Level 2- Memory cache. This may have a set maximum capacity. This keeps the deserialized (that is the data structure usable by the game) tile data in a priority, weighted or and/or last used collection.
Level 3 - Disk cache - this has a set maximum capacity and stores the data in a serialized (that is raw bytes) tile data object on the disk or memory. This may have a priority or weighting collection which tracks the priority of these disk items. The tile priorities may be written to disk so that when the game application is closed, the weighting or priority can be retained across sessions.

The prioritization may be done in the same or different ways on levels 2 and 3. In one embodiment, the prioritization is carried out as follows:
- Each tile is given two values: time and frequency.
- Time is the time since the tile was last accessed.
- Frequency is how often the tile is accessed.
- Every time a tile is accessed frequency is increased with a value, for example 5 or any other suitable value, and time is reset to zero
- Optionally, for example at each tile request or when adding something to the priority collection, the priority collection is "aged". When the collection ages, each item in the collection will increase its time and frequency is decreased by 5.
- When items are added to the priority collection the items are sorted in the order of their priority. If the collection has reached its maximum capacity it will remove the item at the bottom - with the lowest priority. Then the new item is inserted with default priorities.
- The priority of each tile may be defined in any suitable manner and may be for example: frequency + (10 / time + 1)).

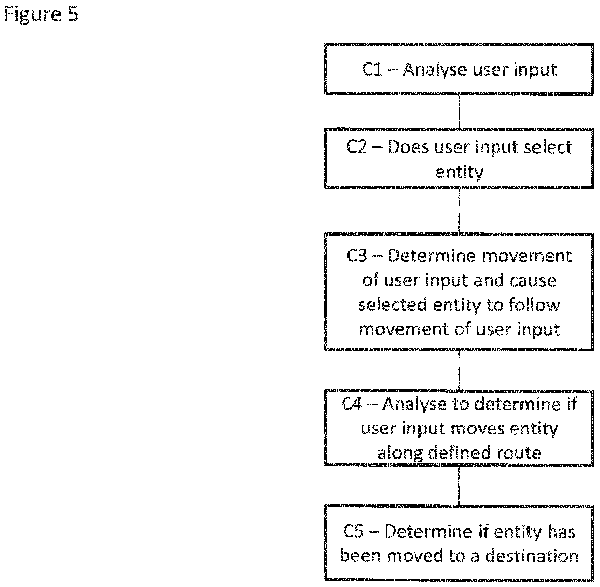

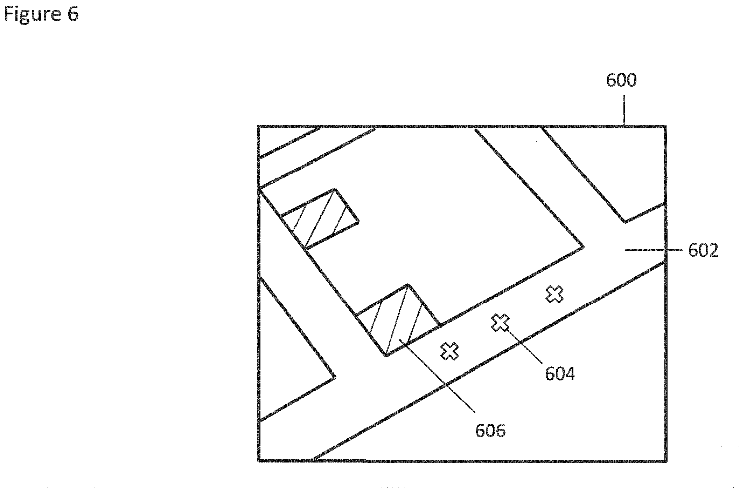

Reference is made to Figures 5 and 6. Figure 6 shows an area 600 which is displayed on the user device. The area displays a map which, in this example, has some roads shown. The map also includes destinations 606 which will be described in more detail later.

In the example shown in Figure 6, the user device has a touch screen. However, it should be appreciated that other types of screen may be used with other embodiments. Also displayed on the map are moving entities 604. These moving entities 604 are generated by the game software running on the user device. In some embodiments, the number and/or position of the entities will be generated pseudo randomly. In other embodiments, the number and/or position of the entities may follow a predetermined pattern and/or may be influenced by one or more game factors. The entities will move across the screen.

Reference is made to Figure 5 in conjunction with Figure 6. In step C1, the user input is analysed.

In step C2, it is determined whether the user input is selecting one of the moving entities 604. Generally this will be determined if the touches the touchscreen at the point at which a particular moving entity is displayed. This may alternatively or additionally be achieved using a pointer device controlling a cursor or the like and a selection input. For example a cursor can be moved by a mouse and the selection input would be achieved by a mouse click.

In step C3, the movement of the user input is determined and the selected entity is caused to follow the path defined by the user input. In the case of a touch screen scenario, this would cause the entity to follow the path defined by the movement of a user's finger on the touchscreen.

In step C4, the movement of the entity caused by the user input with respect to the map is determined. In particular, it is determined whether the entity is moved along a defined route 602. If not the entity is no longer displayed or does not follow the input path.

In step C5 it is determined if the entity has been moved to a destination 606. It should be appreciated that steps C3, C4 and C5 may be iteratively performed until the entity has been moved to a destination or it has been determined in step C4 that the entity has not moved along a defined route.

In one modification, the entity is unable to leave the defined route or a permitted route (such as a road, footpath or the like) even if the user attempts to drag the entity off the defined or permitted route.

In one modification to the method described in relation to Figure 5, an entity need only to be selected by the user of the user device for the user to move to the destination. The entity may be selected in any suitable manner and in one embodiment is selected by tapping or double tapping on the entity, in the case of a touch screen device. In some embodiments, a user may need to tap the entity more than two times to select the entity.

In this embodiment, the entity is controlled to be moved along a defined path to the destination. A controller of the user device, rather than the user of the user device, is configured to cause use the map information of the tiled map to plot a path for the entity such that the entity is displayed and is controlled to move along a defined route of the displayed map. The defined route is a road or the like and the entity may be controlled to be displayed always on an allowed route.

The entities may follow a path that is set by the controller. In some embodiments, the controller uses the map data that details how the roads are laid out on the maps. Each segment of a road is used to build a path that is sent to the entity to follow.

Entities who are attracted to a destination will find their way using the road graph in the map data. Using Dijkstra's algorithm or any other suitable algorithm, the controller finds the shortest way to the destination. Once this path is calculated it is used to control the path followed by the entity.

If the entity is manually dragged by the user moving his/her finger, the dragging is validated using the road data from the map data to make sure the dragging is happening on a road. If the dragging of the finger is outside a road nothing will happen until the finger is back on the road. Once the finger is released the constructed path is used to guide the entity

When the entity is moving under the control of the controller and has not been selected by the user, the controller will direct them to the closest road connection point (such as a turn or intersection) and pass that as a path to control the entity. Once an entity arrives at this location, the controller will randomly choose another road segment to walk on. If it is a dead-end the entity will turn and walk back the same way until it comes to a new road connection point.

In some embodiments, the number of entities which can be dragged in a given period of time may be limited. In some embodiments, the user may interact with the game via a social network to request more entities from the user's friends. In some embodiments, the user may be able to purchase extra entities using in game currency or real money

It should be appreciated that the coordinates of the entities are defined separately from the map data as discussed previously. In some embodiments coordinate data is stored and/or movement data for defining the movement of the entities such that when the game data for the entities is combined with the map data for display, the entities are shown as moving along defined routes such as roads or the like. In some embodiments, the entities are generated by the controller of the user device. In other embodiments, entities may be generated under the control of the game server. In some embodiments, the entities may be usually generated under the control of the user device but in some situations additional entities may be generated under the control of the server. This may for example to reward the player with extra entities.

In some embodiments, the user is able to play the game regardless of user device position.

In step D1, a user is able to select a proximity-based mode and a non-proximity-based mode. In some embodiments, the user device may be configured to automatically select one of the modes dependent on one or more conditions. For example, if the user equipment does not have any location information available then the non-proximity-based mode may be selected. For example, the user device may be in an aeroplane mode or the like.

In some embodiments, the mode may be selected in dependence on a location of the user device. For example, when a user device is in its home location, the default mode may be a non-proximity-based mode. Alternatively, in the home location, the proximity based mode may be the default mode. In some embodiments, information as to the mode selected when a user device was last in that location may be stored and when that user device is in that location, the selected mode may be the previous mode.

Thus, in some embodiments, the mode selected may be done by the user device.

In some embodiments, the user may select the mode, via the user device input.

It should be appreciated that in some embodiments, where a mode is selected by the user device, the user may be able to override that default mode.

The proximity-based mode, of step D2 may for example be the mode such as described in relation to Figure 1 at least.

In step D3, where a non-proximity-based mode has been selected, the map which is to be displayed is selected. The map which is displayed may be a default map. In some embodiments, the default option may simply be the previously used map.

Alternatively, the user may be provided with a list of options from which he is able to select. In some embodiments, a list of available maps may be displayed ordered by frequency of use or by date of last use.

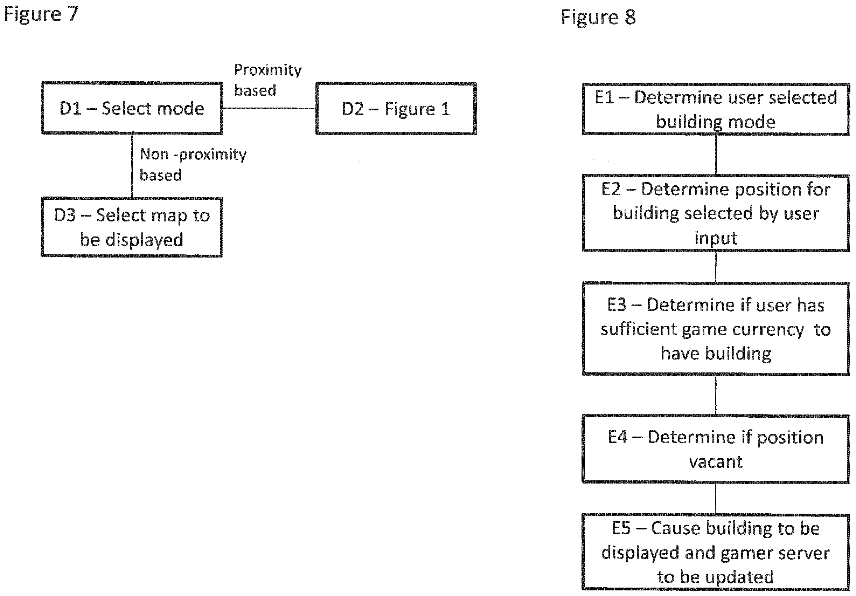

Reference is made to Figure 8 which shows a method by which a player of the game is able to acquire a destination. In the example shown, the destination is a building. In step E1, it is determined that the user has selected a building mode. This will be the detection of interaction by the user with the input of the device.

In step E2, the position for the building is determined based on information received via the user input, based on the user interaction. In the case of a touchscreen, this may be provided by the user touching the location on the map for the building.

In step E3, it is determined if the user has sufficient game currency to have a building. Game currency may be points acquired through playing the game or purchased. It should be appreciated that in some embodiments, this step may be optional. It should be appreciated that in some embodiments, the display may be able to display one or more available building options for that the user. In some embodiments, each available building option may have an associated game currency value. The user will select a building option by interacting with the user input. This step may be optional in some embodiments or may be optional in some modes of game play.

In step E4, it is determined if the position on the map selected by the user is vacant or has space to accommodate the required building. In some embodiments, the building mode may require a live exchange with the server to ensure that the information which the user device has is up-to-date so that the game software can make an up to date determination if the position is available.

In some embodiments, step E4 may take place before step E5 or the two steps may be carried out at the same time.

In step E5, assuming that the user has sufficient game currency and that the position is vacant, the building is displayed on the display.

Information about the building is included in the dynamic game data which may be displayed overlying the underlying static map data.

Information will be sent to the game server to confirm the location and type of the building.

In some embodiments, the user may be provided with two or more options about the purpose of the building or destination. For example, the building may be a shop, a café or restaurant, an office, a house or any other suitable option. In some embodiments, the user may be able to select a particular shop type. In some embodiments, a cluster of the same types of building or destination may be provided in a cluster or geographic location. In that embodiment, the user of the device may have no choice in the type of building or destination. For example, a cluster of cafes may be provided

In some embodiments, the dragging of the entities to a shop or the like may result in the game data for that player being updated to generate points and/or game currency.

It should be appreciated that the destinations may have a commercial purpose or may have only an uncommercial purpose.

In some embodiments, some destinations may have a charitable purpose. For example, charities may be associated with destinations and entities dragged to the charity destination may result in real revenue being generated for the charity.

It should be appreciated that this method of fund raising may be used in non-philanthropic scenarios, for example raising money for particular business ventures or the like.

In some embodiments, the building mode may only be available in proximity situations.

In some embodiments, there may be a geographic limitation on where a building can be built depending on the location of the user device. In some embodiments, the user may be permitted to obtain a building within an x metre radius of the user device. In other embodiments, the limitation may be defined by as within a tile or within y adjacent tiles. In other embodiments, the limitation may be defined by the tiles which are stored or cached in memory. For example a user can only obtain a building if it is in the current or a stored memory tile. One or more of the limitations discussed above may be combined in some embodiments. For example, the user can obtain a building if it is at a location within x meters of her current location and there location is in a stored map tile.

The building data associated with the game play may be stored in the dynamic game data.

In some embodiments, a destination may require one or more resources. By way of example only a café may require coffee and a burger bar may require meat and bread. In some embodiments, the controller of the user device may be configured to spawn or provide resources. Alternatively or additionally, the server may be configured to control the spawning or providing of the resources. In some embodiments the resources may be randomly spawned. Alternatively or additionally the resources may be regularly spawned. Alternatively or additionally resources which are used by a player may be spawned more often. In some embodiments, the spawn of resources which are used by the player may be increased to reward or incentivize the player. In some embodiments, the resources may be available to purchase with real or in game currency.

In one embodiment, the one or more resources may be controlled in a similar manner to entities.

In another embodiment, the building may have one or more employee or the like type entities which can be controlled to pick up the required one or more resources. A route can be defined for the one or more entities. A collection can be activated in any suitable manner, for example by tapping on the employee type entity, tapping on one or more resources or by selecting a resource collection option.

A resource can be added to a route by tapping on that resource or otherwise selecting the resource. In some embodiments, the user can select the resources to be collected. The controller is configured to determine a route for the employee type entity to follow to collect the resources. In some embodiments, the user can define a route for the employee type entity to follow by dragging his/her finger along a route or in any other suitable manner. In some embodiments, the route may be stored and used the next time resources are to be collected. As mentioned the route may be modified to cause one or more extra resources to be picked up. The modified route is then stored as the default mode.

In some embodiments, players are permitted to add at least one floor to a building which is already present on a selected location. Different players may thus have different floors of a building. In some embodiments a player is permitted to have more than one floor of a building.

In some embodiments, any entity which is dragged to a location which provides two or more destinations may cause points or game currency to be shared by each of the destinations.

It should be appreciated that the sharing of the points or game currency may be equal or may be divided in any other suitable way.

In some embodiments, the destinations may be categorized. The entities may have one or more preferred destination categories. If an entity is guided to a destination by the user which matches its preferred destination categories, the game software may provide a special reward or extra points to the player. In some embodiments, the preferred destination category of an entity is masked from the player. In some embodiments, the preferred destination category may be apparent to the player. For example the entities may be colour coded or otherwise tagged. In one embodiment, the entities may have balloons and the colour of the balloon may indicate the preferred destination category.

In some embodiments, the controller of the user device is configured to randomly select the preferred destination categories. In some embodiments, the controller may be configured to provide more entities with preferred destination categories matching one or more of the destinations of the user if the user satisfies a given criteria. The given criteria may be the satisfying of one or more criteria such as number of buildings owned or amount of time the game is played. The given criteria may alternatively or additionally be the failure to satisfy one or more criteria such a number of buildings owned or amount of time the game has been played.

In some embodiments of the game, all of the players play in the same world. In some embodiments, there may be a relatively large number of players. In order to avoid having to provide a user device with a high number of updates and/or high volume of updates, some embodiments may operate is a pseudo live environment. The player will perceive that the world in which he is playing is live although not all of the data is real data and/or up-to-date data. It should be appreciated that in some embodiments it is the dynamic game data which is the data which needs to be updated to take into account the actions by other users.

In some embodiments, this may be achieved by sending updated information only periodically.

In some embodiments, a refresh may be requested by the user of the user device. This may allow a user of the user device to have control over the number and frequency of refreshes.

In some embodiments a refresh may be performed after a fixed period of time.

In some embodiments, a refresh may be performed after a fixed period of time but the user of the user device is able to perform a refresh as required.

A refresh is a where the server provides the user device with updated information. The updated information can comprise all available updates or may be a subset of the available updates.

In some embodiments, this may be achieved by providing updated information associated with a small geographical area.

In some embodiments, this may be achieved by receiving the updated information and applying the updated information over a period of time so that the data appears to be changing.

In one embodiment a file of updated information is received from the server. The file may be in any suitable format and in one embodiment may be in the form of an XML file. The controller of the user device is configured to queue up the events in the received file and apply the updates over a period of time. This will give an appearance of live playing to the user without having to have real time updates. Thus a user can see another building being updated or obtained by another user when the user is playing the game.

In some embodiments, the locally stored software may generate pseudo update information based on predictive algorithms. In this case, the information may be updated in response to the real game information from the game server.

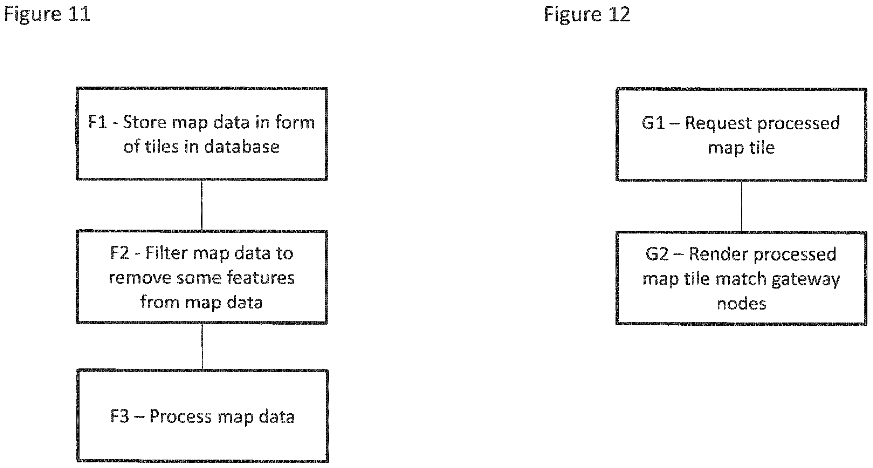

Reference is made to the Figure 11 which shows the processing of map data.

In step F1, map data is stored in a database. The database may store a subset of map data. The map data can be obtained from any suitable source. For example, the map data may be Open Street map data. Open Street map uses a topological data structure. Nodes are points with a geographic position, and are stored as coordinates. They may be used to represent map features without a size such as for example points of interest or mountain peaks. Ways are ordered lists of nodes representing a polyline or a polygon if they form a closed loop. They are used for representing linear features such as streets and rivers, and areas such as forests, parks and lakes. Tags are key value pairs and are used to store metadata about that object. This data can be for example their type, name and/or physical properties. Tags are generally attached to an object in the form of a node or a way. It should be appreciated that the map data may be stored in any suitable database. In some embodiments, the map data will be stored in a SQL database.

In some embodiments, the server will regularly download map data to the database. In other embodiments, the map data may be downloaded in response to a specific request from a game. In that embodiments where a portion of map data is downloaded in response to a specific request from a game, data for the neighbouring area(s) may also be downloaded.

In step F2, the map data is filtered to remove some features from the map data. For example, the filtering may be done in order to retain only key features in the data such as roads, land and water polygons, key points of interest and/or the like. The map data is simplified so that the data which needs to be downloaded from the server to the client device is minimised.

In some embodiments, a Python-based server application may be used that can serve up map tiles based on rendered geographic data. The map data may be simplified by removing some types of the features. The filtering may be done to retain only key features in the data such as roads, land and water polygons, key points of interest and/or the like. The application may be used in order to make an SQL-query against a database where the Open Street Map data has been imported.

Thus the processing may take any suitable format. In some embodiments, the filtering of the map data is carried out by making one or more SQL query against the database in which the data has been stored. In some embodiments, multiple queries are made for each tile. The query may only be within the bounding box for the requested tiles. The query may do the clipping and filtering of features that are required. For example, this may perform clipping and filtering of desired features, for example; place names, some roads, and land or water polygons.

In some embodiments, the filtering of the map data for a particular tile is only carried out when the tile is required by a game. It should be appreciated that where the processing is done in response to a request from a game, map data for neighboring tiles may additionally be processed at the same time.

In some embodiments, in step F3, a post processing of a map data is performed. This may be done using a custom library. The processing may be performed on a per tile basis, in some embodiments. This post processing will generate markers for a map. These markers will define the positions where a user is able to build or have their premises. These markers may be used to define the location of any destination, object, building, or locations such as described by way of example only in this document. These markers are provided in the positions where the game is able to place game objects. Each marker will have a unique identifier. In some embodiments, the markers may use the geographic coordinates in order to provide that unique identifier. In other embodiments, the unique identifier may take any other suitable format.

The post processing may also carry out an analysis of the edges of the tiles to identify those gateway nodes on the edge of the tile. A gateway feature is for example a feature which will be on the adjacent tile as well. Examples of typical gateway features would be roads, lakes roads etc. The gateway nodes are identified so that when the tile is down loaded to the game or used by the game, the client is able to merge polygons and roads over tile borders. In other words, a road on one the edge of one tile can be logically matched up to the road on the edge of the adjacent tile. This will allow a game element to follow a geographic feature across a boundary between two tiles. For example, a game element can be controlled to move along a road or the like which crosses the boundary between the tiles. In some embodiments, a geographic feature is defined by a series of nodes. If the node is without a predetermined distance of a tile, it will be considered to potentially be a gateway node. It should be appreciated that in some embodiments, a gateway node may not be right on the edge of a tile to be considered a gateway node. If the node is within a predetermined distance of the edge of a tile it may be considered as a candidate gateway node and can potentially be matched with a corresponding node on an adjacent tile.

A gateway feature can be part of any tile geometry which crossed tile boundaries, in some embodiments.

These features can also be processed in order to provide hole connection. Using the map data, some geographic features, such as lakes or islands are defined by a plurality of polygons. These polygons define where a particular area can be connected together. The purpose of this is to reduce the amount of data which needs to be down loaded. This will combine geographical features defined by multiple polygons. In some embodiments, this may be done for some features and in other embodiments, this may be done for all features in a tile containing multiple polygons.

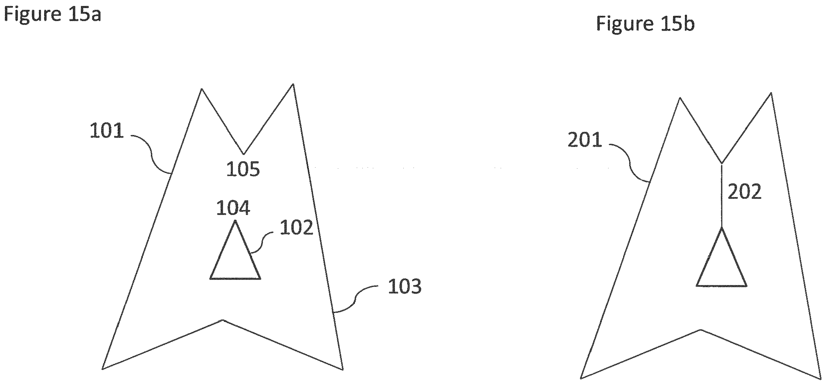

A simple polygon is a polygon where the interior bounded region of the polygon is always to one side (left or right) when the edges of the polygon are traversed in a specific direction (clockwise or anticlockwise). With reference to Figure 15a, a polygon with a hole, 101, within its outer bounded perimeter is therefore not a simple polygon.

A polygon with a hole may be converted to a simple polygon using hole connections. For illustration of the concept of a hole connection a polygon with one hole will be considered as shown in Figure 15a. A polygon with one hole consists of an inner polygon 102 and an outer polygon 103. It may be converted to a simple polygon by introducing two coincident edges between two mutually visible vertices 104 and 105 of the inner polygon and outer polygon, where mutually visible is defined as the condition where the two coincident edges pass only through the outer polygon. Figure 15b shows that the two new coincident edges effectively "cut" open the polygon to form a simple polygon 201. The two new coincident edges are defined as a hole connection 202. Hole connections may be used to combine a land or water feature defined by more than one polygon to one polygon, potentially to simplify map data. This is one example of a way in the data may be processed and any other suitable method may be used in alternative embodiments.

The processed map data may be stored in a protocol buffer format. Protocol buffers may allow serialization of structured data in custom structures. The custom structures are defined in for example .proto files. These structures may be defined as to store data in a format optimized for the game in terms of file size, reading and rendering performance. The data may be structured in a way that make it easy for the game client to read it, minimizing transformations. The format used, Protocol Buffers (from Google), keeps the file size small. The tiles contain only data that is used in the game. This makes the game client use less memory and read the tiles faster.

The format of the data may be in a vector format.

It should be appreciated, that in other embodiments, different formats can alternatively be used for the data.

In some embodiments, the tile data can include one or more of the marker data, the gateway node data, and any other data mentioned previously. In some embodiments, all the above described data is part of the tile data. In other embodiments, one or more of the above mentioned data may be provided separately from the tile data, for example in a separate file.

Reference is made to Figure 12 which shows a method which takes place in the user device. In step G1, the client device will request the processed map tile from the server. In some embodiments, the processed map tile may be provided to the user device if for example a neighbouring tile has been requested.

In step G2, the processed map tile data is processed in order to render the map tile.

The respective gateway nodes of two adjacent tiles are logical connected. In other words, along the boundary of a tile, the gateway nodes on one tile are logically matched to the corresponding gateway nodes on the other tile. This means that when a game element moves it is able to move across a defined path (e.g. road) across a tile boundary. The logical matching is used for navigation to control permitted movements of game elements. In some embodiments, movement of one or more game elements may be constrained to follow a defined path - for example along a road. The logical matching of the gateway nodes allows the processor to move the game element along the path across the boundary. This is because the path on either side of the tile boundary is recognised, as a result of the gateway node matching as being on the same path.

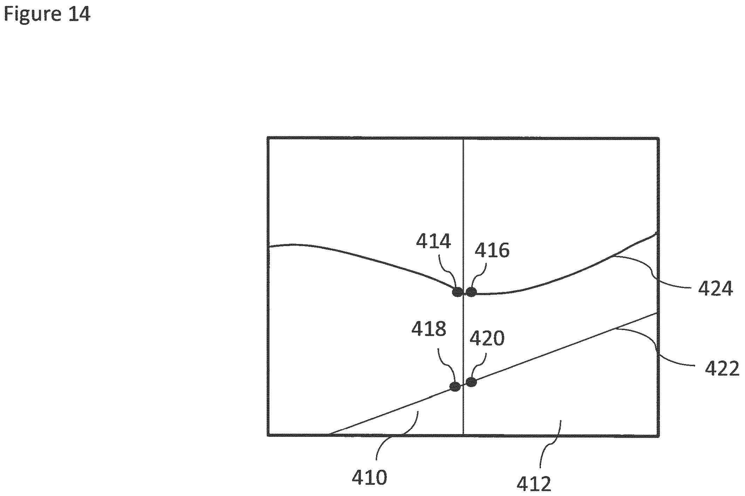

The processor of a user device may be configured to analyse the gateway nodes on adjacent tiles. For each pair of matching gateway nodes on adjacent tiles, the processor may be configured to add a logical connection. Information about the logical connection may be stored in memory. Information about the logical connection may be used in an algorithm which controls which paths or routes a given game element is permitted to follow. This may be as described earlier. Reference is made to Figure 14 which schematically shows a first tile 410 and a second tile 420. Geographic features 424 and 422 extend across the boundary between the first and second tiles. Geographic feature 424 has a gateway node 414 in the first tile and 416 in the second tile. Geographic feature 422 has a gateway node 418 in the first tile and 420 in the second tile. Thus gateway node 414 will be matched to gateway node 416 and a game element can move along path including these nodes from one tile to another. Similarly gateway node 418 will be logically matched to gateway node 420.

It should be appreciated that the matching may be performed using any suitable technique.

In some embodiments, a match may be determined to present if a gateway node on an adjacent tile is within a predetermined distance from a gateway node on a first tile. In other embodiments, different methods may be used to determine if there is a match.

One example way of dealing with a match is now described. Based on the matched gateway nodes, storing a list of logical connections between the respective gateway nodes. These logical connection are used for determining if a geographic feature on a first tile continues on an adjacent tile. This list may be stored in memory.

Based on the matched gateway nodes, the geographic features associated with the matched gateway nodes of the first tile and the adjacent tile may be combined into one geographic feature. The geographic feature may be stored in a memory. This may be used to display the combined geographic feature on a display. The logical matching of the nodes is used to join a map feature which crosses two tiles. This is used to provide a route (road, river, path or the like) which can be navigated by a game element or the like. The joining is used so that the map feature is identified as the same feature even though it crosses a tile boundary. For example if the map feature is a building, the logical connection will mean that the building is considered as a common entity. The map feature can of course be any other map feature.

In some embodiments, the combined geographic feature may be used to move a game element along from one tile to the adjacent tile.

In some embodiments, the joining of the edge nodes defines a connection used for navigation.

In some embodiments, each map tile will have a given zoom level i.e. the given scale. If a user is in an area of one tile and wants to zoom in or out, the user will download a different tile for that location with the required zoom level. Every zoom level, may in some embodiments, have its own tile set. If a user zooms in or out, different tiles will be loaded from over the network, if they have not previously been cached at the user device.

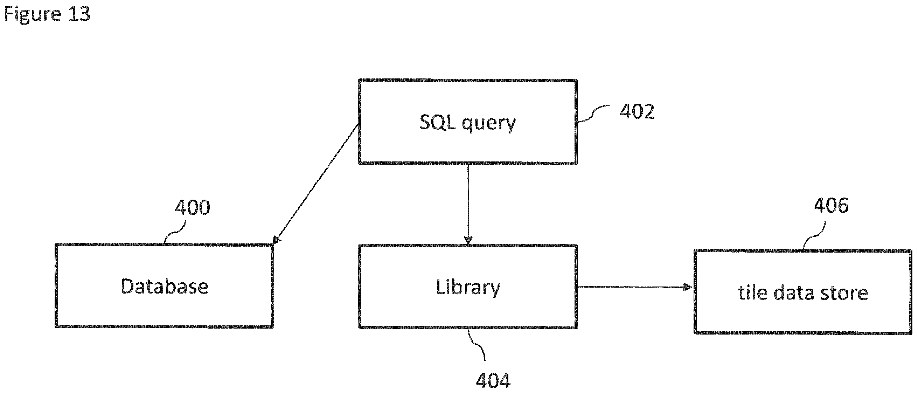

Reference is made to Figure 13 which schematically shows the system for processing the map data. The database 400 is provided which will store the map data which is down loaded. That database may be a SQL database. A SQL query may be provided by a processor 402. The data which is obtained by the SQL query may be provided to the library 404 which carries out the processing mentioned previously. The tile map data, after the processing by the library 404 may be stored in a tile data store 406. The tile data store may be stored on local disk and/or a content delivery network. The data by stored in static, binary files.

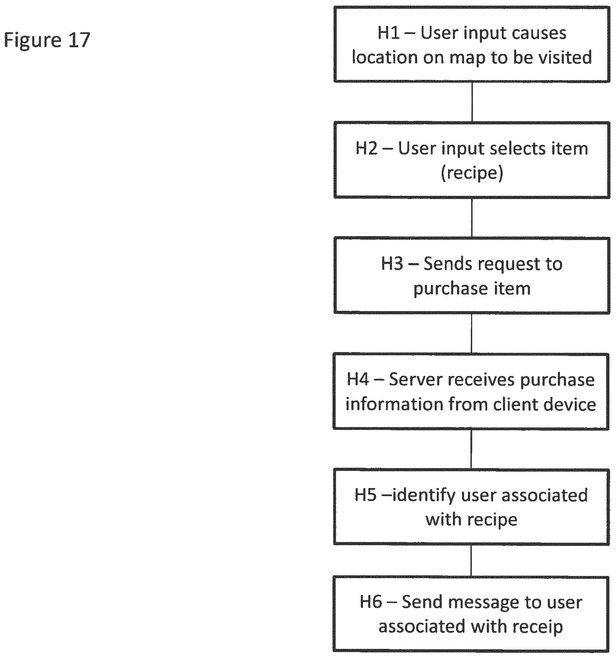

Reference is made to Figure 17 which schematically shows a method of some embodiments.

In step H1, a player of a game visits a particular location. In other words, by using the user input the user will select a particular location on a displayed map. This may be selected by any suitable method, e.g. selecting a location on a map, by guiding a game element to the location, selecting a premises at the location or the like, selecting the location from a list of possible locations or inputting information about a particular location. In the example that will now be described, that location is a restaurant. However, it should be appreciated that this is by way of example only, and other embodiments may alternatively or additionally be used with other destinations. In this example the destination which the user has visited is associated with another user.

In step H2, the user selects an item from that destination. In this example, the item may be a recipe. In some embodiments, the selection of the item may be a purchase of the item. In game currency or real currency may be used to purchase the item. However, this is by way of example only. The user, via the user input, selects the item to purchase. This may be an example by the user clicking or pressing a particular option on a touch screen or using a cursor or the like to select the item.

In step H3, information about the purchase or selection of the item is sent from the user device to the server. This may be part of the periodic updates which are sent from the user device to the server. Alternatively the user device may push the information to the server responsive to the selection of the item. This information will include data which identifies the particular destination. This information may for example include one or more of the following: location information (e.g. the marker); information identifying the destination; and information identifying the item purchased. This identification will be described in more detail later.

In step H4, the server receives the information from the user device.

In step H5, the server uses the information received to identify the owner of the item and/or the owner of the destination with which the item is associated. In some embodiments, one or more of the combination of the marker, the destination information and the item allows the owner of that item to be uniquely identified by the server. In some embodiments, the marker and/or the destination may be sufficient to identify the owner of the premises from which the item has been selected. In alternative embodiments, geographic coordinates could alternatively be used to identify a particular premise.

In step H6, the server will send a message to the owner of the purchased item. This message may be immediately sent or the server may be arranged to wait until the owner of the item is next playing the game or a related game. This server may push a message to the user to indicate that the recipe has been purchased. This could indicate the identity of the purchaser depending on privacy settings. The message may depend on whether the user associated with the purchased recipe is playing the game or not. The message can be a push notification if the game is not being played or an in game message if the user is. The message could be delayed until it is determined that the user is playing the game.

In some embodiments, in step H3, the server will update its information to indicate the one or more premises with which the selected item is to be associated. In some embodiments, the server will update its information to associate the selected item with any destinations of the same type as the destination from which the item has been purchased. For example if the item is a recipe and recipes are associated with restaurants, the server will update its information to associate the recipe with at least one and in some embodiments all the restaurants which the purchaser of the item has. These will be the premises of the user who has purchased the recipe. The server will be provided with information identifying the user which has purchased the item.

In one alternative embodiment, a menu is caused to be displayed on the display which prompts the user to select the location with which the user wishes to associate that item. Thus, the user will associate the purchased item with one of his own destinations. In some embodiments, the user will be prompted to select one of his destinations with which to associate the item. In some embodiments, the destination needs to be of a particular type. For example, in the case where the item purchased is associated with a restaurant, then the user will associate the purchased items with one of his own restaurants.

In some items may be associated with more than one or more different types of destinations.

In the embodiment described above, the purchase or selection of an item requires the sending of a request to the server. Alternatively or additionally, the purchase of an item or the like can be supported by the client on the user device.

In an alternative embodiments, each item may have a unique identifier which is associated in the database with the user with which the item is associated.

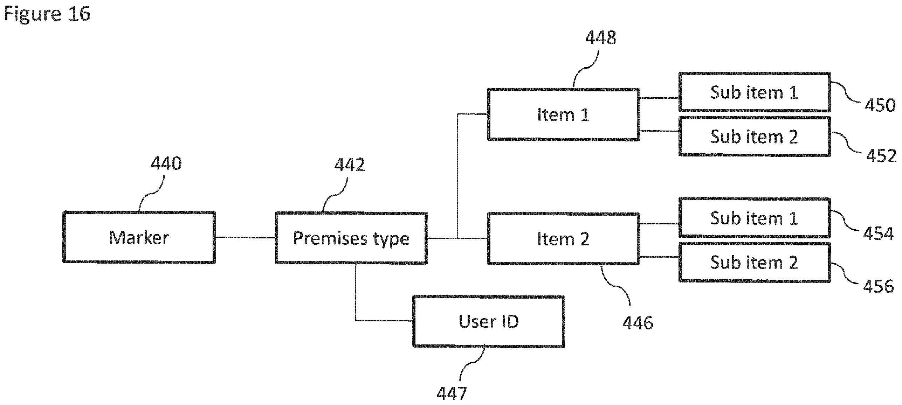

Reference is now made to Figure 16, which schematically shows a data structure of an embodiment. Associated with at least some markers 440 will be at least one premises. The marker is location information and is the marker as previously discussed. The data structure will indicate the type of the premises 442. Associated with the premises type will be identity information 444 associated with the owner of the premises or the user otherwise associated with the premises. This user identity information is unique to a particular player of the game. Also associated with the premises type will be one or more items 448 and 446. In this specific example, the items are recipes. However, the item can take any suitable form.

In some embodiments one or more sub-items may be associated with each item. In this example, each recipe has associated with it a variety of sub items 450-456. These sub-items are ingredients in this embodiment. However, these sub-items can take any suitable format. It should be appreciated that in some embodiments, the sub-items are optional. In some embodiments, one or more sub-items may have in turn have one or more further sub-items and so on.

The information stored in the database may thus comprise one or more of:
a marker-this information may define the precise location on a tile;
a type of premises - e.g. a restaurant or a coffee shop. This may alternatively or additionally comprise an identifier;
the identity of the user associated with the premises;
one or more items associated the premises. This may comprise for example a recipe. The information may comprise the identity of the one or more items;
one or more sub items associated with a respective item. In some embodiments, these sub items may ingredients associated with each recipe.

This information which is held in the database will allow the user who is associated with the premises at a particular location and hence the item to be identified.

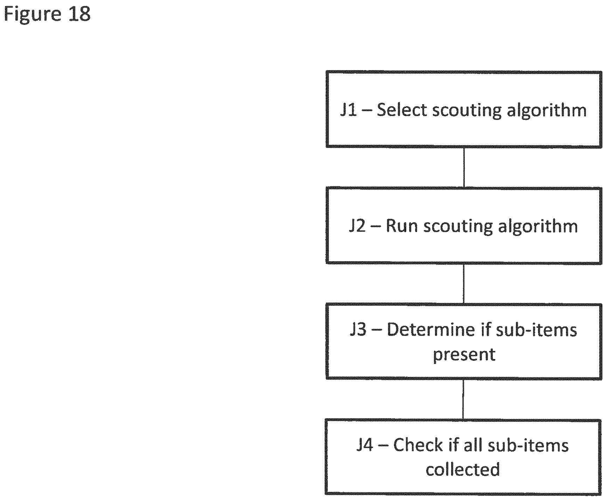

In some embodiments, the game may support a scouting mechanism the aim of which is to collect at least one sub-item for an item. In some embodiments the aim may be find all of the sub-items for an item. In this regard, reference is made to Figure 18 which shows a method of an embodiment.

By way of example only, an item (recipe) may comprise four sub-items. By way of example, one or more or all the sub-- items can be located on the map and/or one or more or more sub-items may be obtained (e.g. by purchasing) from one or more other premises. The other premises may be of the same type as that to which the item is associated and/or may be of a different type.

The user, via the user interface, selects a scouting algorithm in step J1. The processor of the user device may thus select in response to an input from the user interface, a scouting algorithm. This may be achieved by selection of a scouting character in the game.

In step J2, the scouting algorithm is run. This will send a game element to a destination of a map. The game element may be a specific scouting game element. The scouting algorithm may have a random part controlling the destination of the game elements, in some embodiments.

In some embodiments, the scouting game element will have a destination at which one or more sub-items may be found. In some embodiments, the scouting game element destination may not always have one or more sub-items. Thus the scouting algorithm may need to be performed n times to collect m sub-items where n is greater than m.

In step J3, a determination is made as to whether one or more sub-items are present at the destination. This may be done by the processor or in response to an input provided by the user via the user interface.

In step J4, a determination is made as to whether all sub-items have been collected. If not the method may loop back to step J1. In some embodiments, once all the sub-items for an item have been collected, the item may be available to be purchased or selected by a different player, as described in relation to Figure 17. Thus in one example, once a recipe (item) is fully collected (all sub-items are in the possession of the player), it is added to that that player's restaurant's menu as a new dish (recipe). The information stored in the server may include information indicating if the item is available for purchase to another user. This information which is provided to user device of another user will be such that the another user is able to select an item which is available but is not able to select or purchase an item which is not.

Furthermore, various methods have been described. It should be appreciated that these methods will be implemented in apparatus, where the apparatus is implemented by any suitable circuitry. Some embodiments may be implemented by at least one memory and at least one processor. The memory is provided by memory circuitry and the processor is provided by processor circuitry. Some embodiments may be provided by a computer program running on the at least one processor. The computer program may comprise computer implemented instructions which are stored in the at least one memory and which may be run on the at least one processor.

It is also noted herein that while the above describes embodiments of the invention, there are several variations and modifications which may be made to the disclosed solution without departing from the scope of the present invention as defined in the appended claims.

## Claims

1. A computer implemented method carried out in a game server, the method comprising:
processing (F2) map data to provide a simplified tile of map data, said processing causing removal of at least one map feature from said map data to provide a simplified tile of map data, wherein said simplified tile of map data is for use in playing a computer implemented game running on a user device;
analysing (F3) the simplified tile of map data to identify and provide for said simplified tile of map data at least one gateway node (414, 418), each gateway node being provided for a respective map feature crossing a boundary of said tile and providing with a corresponding gateway node (416, 420) of an adjacent tile a logical matching for the respective map feature across the boundary of said tile, such that the user device can store a logical connection indicating that the respective map feature extends across the boundary between said tile and said adjacent tile to define a route for navigation of a game element between said tile and said adjacent tile; and
providing, via a network, said simplified tile of map data including the at least one gateway node (414, 418) to the user device.

2. A method as claimed in claim 1, comprising storing said map data in a database.

3. A method as claimed in any preceding claim, wherein said processing comprises querying a database storing said map data.

4. A method as claimed in any preceding claim, wherein said processing comprises filtering said map data.

5. A method as claimed in any preceding claim, wherein said processing further comprises for at least one geographic feature defined by a plurality of polygons, combining said plurality of polygons to one polygon.

6. A method as claimed in any preceding claim, wherein said processing further comprises generating a plurality of markers, each marker defining a position where the game is able to place one or more game objects.

7. A method as claimed in claim 6, wherein each marker has a unique identifier.

8. A computer implemented method carried out in a user device comprising:
obtaining (G1), from a game server via a network, at least two tiles of map data, the tiles of map data being simplified tiles of map data obtained by removal of at least one map feature from map data at the game server, said tiles being adjacent to one another, each of said tiles of map data comprising at least one gateway node (414, 418) provided for a respective map feature crossing a boundary between a first and a second of said tiles, wherein each gateway node on the first of said tiles provides, with each corresponding gateway node (416, 420) of the second tile, a logical matching for the respective map feature across the boundary between the first and second tiles;
storing for each gateway node (414, 418) of the first tile and the corresponding gateway node (416, 420) of the second tile a logical connection indicating that the respective map feature extends across the boundary between said first and second tiles, to define a path between the first tile and the second tile, such that a game element of a computer implemented game running on the user device is able to navigate a route along the map feature from the first tile to the second tile; and
rendering (G2) at least part of said tiles of map data.

9. A method as claimed in claim 8, comprising determining a location of a user device and displaying a map, wherein said map which is displayed is dependent on a location of the user device.

10. A method as claimed in claim 8 or 9, wherein said map data comprises a plurality of markers, each marker defining a position where the game is able to place one or more game objects, said method comprising using at least one marker to control the position of at least one game object.

11. An apparatus of a game server comprising:
a database configured to store map data;
at least one processor configured to:
process the map data to provide a simplified tile of map data, said processor configured to cause removal of at least one map feature from said map data to provide a simplified tile of map data, wherein said simplified tile of map data is for use in playing a computer implemented game running on a user device; and
analyse the simplified tile of map data to identify and provide for said simplified tile of map data at least one gateway node (414, 418), each gateway node being provided for a respective map feature crossing a boundary of said tile and providing with a corresponding gateway node (416, 420) of an adjacent tile, a logical matching for the respective map feature across the boundary of said tile, such that the user device can store a logical connection indicating that the respective map feature extends across the boundary between said tile and said adjacent tile to define a route for navigation of a game element between said tile and said adjacent tile; and
an output configured to provide said simplified tile of map data including the at least one gateway node (414, 418) to the user device.

12. An apparatus of a user device comprising:
a memory configured to store tile data;
at least one processor configured to:
obtain, from a game server via a network, at least two tiles of map data, the tiles of map data being simplified tiles of map data obtained by removal of at least one map feature from map data at the game server, said tiles being adjacent to one another, each of said tiles of map data comprising at least one gateway node (414, 418) provided for a respective map feature crossing a boundary between a first and a second of said tiles, wherein each gateway node (414, 418) on the first of said tiles provides, with each corresponding gateway node (416, 420) of the second tile, a logical matching for the respective map feature across the boundary between the first and second tiles;
store for each gateway node (414, 418) of the first tile and the corresponding gateway node (416, 420) of the second tile a logical connection indicating that the respective map feature extends across the boundary between said first and second tiles, to define a path between the first tile and the second tile, such that a game element of a computer implemented game running on the user device is able to navigate a route along the map feature from the first tile to the second tile;
render at least part of said tiles of map data to provided rendered map data; and
output said rendered map data to a display of the user device.

13. A computer program comprising computer executable instructions which when executed by at least one processor carry out the method of any of claims 1 to 10.

## Patentansprüche

1. Computerimplementiertes Verfahren, das in einem Spielserver ausgeführt wird, wobei das Verfahren umfasst:
Verarbeiten (F2) von Kartendaten, um eine vereinfachte Kartendatenkachel bereitzustellen, wobei das Verarbeiten ein Löschen von mindestens einem Kartenmerkmal aus den Kartendaten verursacht, um eine vereinfachte Kartendatenkachel bereitzustellen, wobei die vereinfachte Kartendatenkachel zur Verwendung beim Spielen eines computerimplementierten Spiels, das auf einer Benutzervorrichtung ausgeführt wird, ist;
Analysieren (F3) der vereinfachten Kartendatenkachel, um mindestens einen Gateway-Knoten (414, 418) zu identifizieren und für die vereinfachte Kartendatenkachel bereitzustellen, wobei jeder Gateway-Knoten für ein jeweiliges Kartenmerkmal bereitgestellt wird, das eine Grenze der Kachel überquert und eine logische Übereinstimmung für das jeweilige Kartenmerkmal über die Grenze der Kachel mit einem entsprechenden Gateway-Knoten (416, 420) einer benachbarten Kachel bereitstellt, so dass die Benutzervorrichtung eine logische Verbindung speichern kann, die angibt, dass das jeweilige Kartenmerkmal sich über die Grenze zwischen der Kachel und der benachbarten Kachel erstreckt, um eine Route zur Navigation eines Spielelements zwischen der Kachel und der benachbarten Kachel zu definieren; und
Bereitstellen der vereinfachten Kartendatenkachel, einschließlich des mindestens einen Gateway-Knotens (414, 418), an die Benutzervorrichtung mittels eines Netzwerks.

2. Verfahren nach Anspruch 1, umfassend ein Speichern der Kartendaten in einer Datenbank.

3. Verfahren nach einem vorhergehenden Anspruch, wobei das Verarbeiten ein Abfragen einer Datenbank umfasst, die die Kartendaten speichert.

4. Verfahren nach einem vorhergehenden Anspruch, wobei das Verarbeiten ein Filtern der Kartendaten umfasst.

5. Verfahren nach einem vorhergehenden Anspruch, wobei das Verarbeiten weiterhin für mindestens ein geographisches Merkmal, das von einer Vielzahl von Polygonen definiert wird, ein Kombinieren der Vielzahl von Polygonen zu einem Polygon umfasst.

6. Verfahren nach einem vorhergehenden Anspruch, wobei das Verarbeiten weiterhin ein Erzeugen einer Vielzahl von Markern umfasst, wobei jeder Marker eine Position definiert, an der das Spiel ein oder mehrere Spielobjekte platzieren kann.

7. Verfahren nach Anspruch 6, wobei jeder Marker eine einzigartige Kennung aufweist.

8. Computerimplementiertes Verfahren, das in einer Benutzervorrichtung ausgeführt wird, umfassend:
Erhalten (G1) von mindestens zwei Kartendatenkacheln von einem Spielserver mittels eines Netzwerks, wobei die Kartendatenkacheln vereinfachte Kartendatenkacheln sind, die durch Löschen von mindestens einem Kartenmerkmal aus Kartendaten am Spielserver erhalten werden, wobei die Kacheln zueinander benachbart sind, wobei jede der Kartendatenkacheln mindestens einen Gateway-Knoten (414, 418) umfasst, der für ein jeweiliges Kartenmerkmal bereitgestellt wird, das eine Grenze zwischen einer ersten und einer zweiten der Kacheln überquert, wobei jeder Gateway-Knoten auf der ersten der Kacheln eine logische Übereinstimmung für das jeweilige Kartenmerkmal über die Grenze zwischen der ersten und der zweiten Kachel mit jedem entsprechenden Gateway-Knoten (416, 420) der zweiten Kachel bereitstellt;
Speichern einer logischen Verbindung für jeden Gateway-Knoten (414, 418) der ersten Kachel und den entsprechenden Gateway-Knoten (416, 420) der zweiten Kachel, die angibt, dass das jeweilige Kartenmerkmal sich über die Grenze zwischen der ersten und der zweiten Kachel erstreckt, so dass ein Spielelement eines computerimplementierten Spiels, das auf der Benutzervorrichtung ausgeführt wird, eine Route entlang dem Kartenmerkmal von der ersten Kachel zu der zweiten Kachel navigieren kann; und
Rendern (G2) von mindestens einem Teil der Kartendatenkacheln.

9. Verfahren nach Anspruch 8, umfassend ein Bestimmen eines Orts einer Benutzervorrichtung und ein Anzeigen einer Karte, wobei die Karte, die angezeigt wird, von einem Ort der Benutzervorrichtung abhängt.

10. Verfahren nach Anspruch 8 oder 9, wobei die Kartendaten eine Vielzahl von Markern umfassen, wobei jeder Marker eine Position definiert, an der das Spiel ein oder mehrere Spielobjekte platzieren kann, wobei das Verfahren ein Verwenden von mindestens einem Marker, um die Position von mindestens einem Spielobjekt zu steuern, umfasst.

11. Gerät eines Spielservers, umfassend:
eine Datenbank, die dazu konfiguriert ist, Kartendaten zu speichern;
mindestens einen Prozessor, der konfiguriert ist zum:
Verarbeiten der Kartendaten, um eine vereinfachte Kartendatenkachel bereitzustellen, wobei der Prozessor dazu konfiguriert ist, ein Löschen von mindestens einem Kartenmerkmal aus den Kartendaten zu verursachen, um eine vereinfachte Kartendatenkachel bereitzustellen, wobei die vereinfachte Kartendatenkachel zur Verwendung beim Spielen eines computerimplementierten Spiels, das auf einer Benutzervorrichtung ausgeführt wird, ist;
Analysieren der vereinfachten Kartendatenkachel, um mindestens einen Gateway-Knoten (414, 418) zu identifizieren und für die vereinfachte Kartendatenkachel bereitzustellen, wobei jeder Gateway-Knoten für ein jeweiliges Kartenmerkmal bereitgestellt wird, das eine Grenze der Kachel überquert und eine logische Übereinstimmung für das jeweilige Kartenmerkmal über die Grenze der Kachel mit einem entsprechenden Gateway-Knoten (416, 420) einer benachbarten Kachel bereitstellt, so dass die Benutzervorrichtung eine logische Verbindung speichern kann, die angibt, dass das jeweilige Kartenmerkmal sich über die Grenze zwischen der Kachel und der benachbarten Kachel erstreckt, um eine Route zur Navigation eines Spielelements zwischen der Kachel und der benachbarten Kachel zu definieren; und
einen Ausgang, der dazu konfiguriert ist, die vereinfachte Kartendatenkachel, einschließlich des mindestens einen Gateway-Knotens (414, 418), an die Benutzervorrichtung bereitzustellen.

12. Gerät einer Benutzervorrichtung, umfassend:
einen Speicher, der dazu konfiguriert ist, Kacheldaten zu speichern;
mindestens einen Prozessor, der konfiguriert ist zum:
Erhalten von mindestens zwei Kartendatenkacheln von einem Spielserver mittels eines Netzwerks, wobei die Kartendatenkacheln vereinfachte Kartendatenkacheln sind, die durch Löschen von mindestens einem Kartenmerkmal aus Kartendaten am Spielserver erhalten werden, wobei die Kacheln zueinander benachbart sind, wobei jede der Kartendatenkacheln mindestens einen Gateway-Knoten (414, 418) umfasst, der für ein jeweiliges Kartenmerkmal bereitgestellt wird, das eine Grenze zwischen einer ersten und einer zweiten der Kacheln überquert, wobei jeder Gateway-Knoten (414, 418) auf der ersten der Kacheln eine logische Übereinstimmung für das jeweilige Kartenmerkmal über die Grenze zwischen der ersten und der zweiten Kachel mit jedem entsprechenden Gateway-Knoten (416, 420) der zweiten Kachel bereitstellt;
Speichern einer logischen Verbindung für jeden Gateway-Knoten (414, 418) der ersten Kachel und den entsprechenden Gateway-Knoten (416, 420) der zweiten Kachel, die angibt, dass das jeweilige Kartenmerkmal sich über die Grenze zwischen der ersten und der zweiten Kachel erstreckt, so dass ein Spielelement eines computerimplementierten Spiels, das auf der Benutzervorrichtung ausgeführt wird, eine Route entlang dem Kartenmerkmal von der ersten Kachel zu der zweiten Kachel navigieren kann;
Rendern von mindestens einem Teil der Kartendatenkacheln, um gerenderte Kartendaten bereitzustellen; und
Ausgeben der gerenderten Kartendaten an eine Anzeige der Benutzervorrichtung.

13. Computerprogramm, umfassend computerausführbare Anweisungen, die bei Ausführung durch mindestens einen Prozessor das Verfahren nach einem der Ansprüche 1 bis 10 ausführen.

## Revendications

1. Procédé mis en œuvre par ordinateur effectué dans un serveur de jeux, le procédé comportant les étapes consistant à :
traiter (F2) des données cartographiques pour fournir une mosaïque simplifiée de données cartographiques, ladite étape consistant à traiter amenant le retrait d'au moins une caractéristique de carte en provenance desdites données cartographiques pour fournir une mosaïque simplifiée de données cartographiques, dans lequel ladite mosaïque simplifiée de données cartographiques est destinée à des fins d'utilisation pour jouer à un jeu mis en œuvre par ordinateur qui est exécuté sur un dispositif utilisateur ;
analyser (F3) la mosaïque simplifiée de données cartographiques pour identifier et fournir, pour ladite mosaïque simplifiée de données cartographiques, au moins un noeud de passerelle (414, 418), chaque noeud de passerelle étant fourni pour une caractéristique de carte respective qui croise une limite de ladite mosaïque et fournissant, avec un noeud de passerelle correspondant (416, 420) d'une mosaïque adjacente, une logique qui correspond pour la caractéristique de carte respective en travers de la limite de ladite mosaïque, de telle sorte que le dispositif utilisateur peut stocker une connexion logique qui indique que la caractéristique de carte respective s'étend en travers de la limite entre ladite mosaïque et ladite mosaïque adjacente en vue de définir une route à des fins de navigation d'un élément de jeu entre ladite mosaïque et ladite mosaïque adjacente ; et
fournir, par le biais d'un réseau, ladite mosaïque simplifiée de données cartographiques comprenant ledit au moins un noeud de passerelle (414, 418) au dispositif utilisateur.

2. Procédé selon la revendication 1, comportant l'étape consistant à stocker lesdites données cartographiques dans une base de données.

3. Procédé selon l'une quelconque des revendications précédentes, dans lequel ladite étape consistant à traiter comporte l'étape consistant à interroger une base de données stockant lesdites données cartographiques.

4. Procédé selon l'une quelconque des revendications précédentes, dans lequel ladite étape consistant à traiter comporte l'étape consistant à filtrer lesdites données cartographiques.

5. Procédé selon l'une quelconque des revendications précédentes, dans lequel ladite étape consistant à traiter comporte par ailleurs, pour au moins une caractéristique géographique définie par une pluralité de polygones, l'étape consistant à combiner ladite pluralité de polygones en un polygone.

6. Procédé selon l'une quelconque des revendications précédentes, dans lequel ladite étape consistant à traiter comporte par ailleurs l'étape consistant à générer une pluralité de marqueurs, chaque marqueur définissant une position dans laquelle le jeu est en mesure de placer un ou plusieurs objets de jeu.

7. Procédé selon la revendication 6, dans lequel chaque marqueur a un identifiant unique.

8. Procédé mis en oeuvre par ordinateur effectué dans un dispositif utilisateur comportant les étapes consistant à :
obtenir (G1), en provenance d'un serveur de jeux par le biais d'un réseau, au moins deux mosaïques de données cartographiques, les mosaïques de données cartographiques étant des mosaïques simplifiées de données cartographiques obtenues par le retrait d'au moins une caractéristique de carte en provenance de données cartographiques au niveau du serveur de jeux, lesdites mosaïques étant adjacentes les unes par rapport aux autres, chacune desdites mosaïques de données cartographiques comportant au moins un noeud de passerelle (414, 418) fourni pour une caractéristique de carte respective qui croise une limite entre une première et une deuxième desdites mosaïques, dans lequel chaque noeud de passerelle sur la première desdites mosaïques fournit, avec chaque noeud de passerelle correspondant (416, 420) de la deuxième mosaïque, une logique qui correspond pour la caractéristique de carte respective en travers de la limite entre les première et deuxième mosaïques ;
stocker, pour chaque noeud de passerelle (414, 418) de la première mosaïque et pour le noeud de passerelle correspondant (416, 420) de la deuxième mosaïque, une connexion logique qui indique que la caractéristique de carte respective s'étend en travers de la limite entre lesdites première et deuxième mosaïques, pour définir une trajectoire entre la première mosaïque et la deuxième mosaïque, de telle sorte qu'un élément de jeu d'un jeu mis en œuvre par ordinateur qui est exécuté sur le dispositif utilisateur est en mesure de naviguer une route le long de la caractéristique de carte en allant de la première mosaïque à la deuxième mosaïque ; et
effectuer le rendu (G2) d'au moins une partie desdites mosaïques de données cartographiques.

9. Procédé selon la revendication 8, comportant les étapes consistant à déterminer un emplacement d'un dispositif utilisateur et à afficher une carte, dans lequel ladite carte qui est affichée est dépendante d'un emplacement du dispositif utilisateur.

10. Procédé selon la revendication 8 ou la revendication 9, dans lequel lesdites données cartographiques comportent une pluralité de marqueurs, chaque marqueur définissant une position dans laquelle le jeu est en mesure de placer un ou plusieurs objets de jeu, ledit procédé comportant l'étape consistant à utiliser au moins un marqueur pour contrôler la position d'au moins un objet de jeu.

11. Appareil d'un serveur de jeux comportant :
une base de données configurée pour stocker des données cartographiques ;
au moins un processeur configuré pour :
traiter les données cartographiques pour fournir une mosaïque simplifiée de données cartographiques, ledit processeur étant configuré pour causer le retrait d'au moins une caractéristique de carte en provenance desdites données cartographiques pour fournir une mosaïque simplifiée de données cartographiques, dans lequel ladite mosaïque simplifiée de données cartographiques est destinée à des fins d'utilisation pour jouer à un jeu mis en œuvre par ordinateur qui est exécuté sur un dispositif utilisateur ; et
analyser la mosaïque simplifiée de données cartographiques pour identifier et fournir, pour ladite mosaïque simplifiée de données cartographiques, au moins un noeud de passerelle (414, 418), chaque noeud de passerelle étant fourni pour une caractéristique de carte respective qui croise une limite de ladite mosaïque et fournissant, avec un noeud de passerelle correspondant (416, 420) d'une mosaïque adjacente, une logique qui correspond pour la caractéristique de carte respective en travers de la limite de ladite mosaïque, de telle sorte que le dispositif utilisateur peut stocker une connexion logique qui indique que la caractéristique de carte respective s'étend en travers de la limite entre ladite mosaïque et ladite mosaïque adjacente en vue de définir une route à des fins de navigation d'un élément de jeu entre ladite mosaïque et ladite mosaïque adjacente ; et
une sortie configurée pour fournir ladite mosaïque simplifiée de données cartographiques comprenant ledit au moins un noeud de passerelle (414, 418) au dispositif utilisateur.

12. Appareil d'un dispositif utilisateur comportant :
une mémoire configurée pour stocker des données de mosaïques ;
au moins un processeur configuré pour :
obtenir, en provenance d'un serveur de jeux par le biais d'un réseau, au moins deux mosaïques de données cartographiques, les mosaïques de données cartographiques étant des mosaïques simplifiées de données cartographiques obtenues par le retrait d'au moins une caractéristique de carte en provenance de données cartographiques au niveau du serveur de jeux, lesdites mosaïques étant adjacentes les unes par rapport aux autres, chacune desdites mosaïques de données cartographiques comportant au moins un noeud de passerelle (414, 418) fourni pour une caractéristique de carte respective qui croise une limite entre une première et une deuxième desdites mosaïques, dans lequel chaque noeud de passerelle (414, 418) sur la première desdites mosaïques fournit, avec chaque noeud de passerelle correspondant (416, 420) de la deuxième mosaïque, une logique qui correspond pour la caractéristique de carte respective en travers de la limite entre les première et deuxième mosaïques ;
stocker, pour chaque noeud de passerelle (414, 418) de la première mosaïque et pour le noeud de passerelle correspondant (416, 420) de la deuxième mosaïque, une connexion logique qui indique que la caractéristique de carte respective s'étend en travers de la limite entre lesdites première et deuxième mosaïques, pour définir une trajectoire entre la première mosaïque et la deuxième mosaïque, de telle sorte qu'un élément de jeu d'un jeu mis en oeuvre par ordinateur qui est exécuté sur le dispositif utilisateur est en mesure de naviguer une route le long de la caractéristique de carte en allant de la première mosaïque à la deuxième mosaïque ;
effectuer le rendu d'au moins une partie desdites mosaïques de données cartographiques pour fournir des données cartographiques rendues ; et
émettre en sortie lesdites données cartographiques rendues au niveau d'un affichage du dispositif utilisateur.

13. Programme informatique comportant des instructions en mesure d'être exécutées par un ordinateur qui, quand elles sont exécutées par au moins un processeur, effectuent le procédé selon l'une quelconque des revendications 1 à 10.
